# DEMANDE DE BREVET EUROPEEN

(11) **EP 1 036 692 A1**
(43) Date de publication de la demande: **20.09.2000**
(21) Numéro de dépôt: 00400744.9
(22) Date de dépôt: 17.03.2000
(51) Int. Cl.: B60K 35/00

(54) **Dispositif de montage d'un écran de projection ou d'affichage d'informations pour véhicules automobiles**

(30) Priorité: 17.03.1999 FR 9903292
(71) Demandeur: Renault, 92100 Boulogne Billancourt (FR)
(72) Inventeur: Vulphie, Claude, 89340 Villeneuve la Guyard (FR); Petit, Gérard, 78290 Croissy sur Seine (FR)

(57) **Abrégé**

Dispositif de montage d'un écran de projection ou d'affichage d'informations pour véhicule automobile, comprenant un support (3) comprenant des glissières (4, 5) le long desquelles ledit écran (2) est mobile entre une position rentrée et une position sortie, un levier pivotant (8) relié de façon articulée d'une part audit support et d'autre part audit écran, des moyens d'actionnement (13, 22) pour faire pivoter ledit levier entre deux positions extrèmes correspondant à la position rentrée et à la position sortie dudit écran, et des moyens de maintien (13, 17) dudit levier à ses positions extrèmes.

## Description

La présente invention concerne un dispositif de montage d'un écran de projection ou d'affichage d'informations pour le conducteur et/ou les passagers d'un véhicule automobile.

L'habitude veut que les informations délivrées au conducteur d'un véhicule automobile apparaîssent dans le tableau de bord en arrière du volant.

On tend désormais de plus en plus à délivrer au moins certaines de ces informations ou d'autres informations en d'autres endroits du véhicule, mieux visibles par le conducteur et avec plus de sécurité et/ou également visibles par les passagers.

Pour celà, on propose de délivrer les informations soit directement sur le pare-brise en prévoyant une zone de projection adaptée, soit sur des écrans de projection ou d'affichage fixés sur la planche de bord et éventuellement réglables ou rabattables.

La présente invention a pour but d'améliorer la disposition de tels écrans.

Le dispositif de montage d'un écran de projection ou d'affichage d'informations pour véhicule automobile, selon l'invention, comprend un support comprenant des glissières le long desquelles ledit écran est mobile entre une position rentrée et une position sortie, un levier pivotant relié de façon articulée d'une part audit support et d'autre part audit écran, des moyens d'actionnement pour faire pivoter ledit levier entre deux positions extrêmes correspondant à la position rentrée et à la position sortie dudit écran, et des moyens de maintien dudit levier à ces positions extrêmes.

Selon l'invention, ledit écran est de préférence porté par une traverse reliée de façon articulée audit levier.

Selon l'invention, ledit levier est peut avantageusement être monté pivotant sur un axe dudit support, ledit levier et ledit écran présentant respectivement un doigt et un passage oblong, dans lequel est engagé ce doigt.

Selon l'invention, ledit levier s'étend et se déplace de préférence dans un plan parallèle audit écran.

Selon l'invention, ledit support présente de préférence des moyens de pivotement dont l'axe s'étend parallèlement audit écran et perpendiculairement auxdites glissières, ainsi que des moyens de réglage de la position angulaire dudit support autour de cet axe.

Selon l'invention, ledit support peut avantageusement comprendre une plaque, ledit écran s'étendant parallèlement à et d'un côté de cette plaque.

Selon une variante de l'invention, lesdits moyens d'actionnement du levier comprennent un ressort agissant sur ledit levier de façon à déplacer ledit écran de sa position rentrée à sa position sortie.

Selon l'invention, lesdits moyens de maintien comprennent de préférence un doigt coopérant avec ledit levier lorsque ledit écran est à sa position rentrée, ainsi qu'un bouton d'actionnement permettant d'escamoter ce doigt de maintien à l'encontre d'un ressort.

Selon une variante de l'invention, lesdits moyens d'actionnement comprennent des moyens de motorisation, en particulier un électro-aimant, un vérin, un motoréducteur électrique.

Selon une variante de l'invention, lesdits moyens d'actionnement comprennent une lame à mémoire de forme.

Selon une variante préférée d'installation de l'invention, le dispositif de montage est intégré en dessous d'une paroi de la planche de bord du véhicule, cette paroi présentant une fente pour le passage dudit écran.

La présente invention sera mieux comprise à l'étude de dispositifs de montage d'un écran de projection d'affichage d'informations pour véhicule automobile, décrits à titres d'exemples non limitatifs et illustrés par le dessin sur lequel :
- la figure 1 représente une vue en perspective d'un premier dispositif de montage d'un écran selon la présente invention, l'écran étant en position rentrée ;
- la figure 2 représente une vue de côté partielle du dispositif de montage de la figure 1 ;
- la figure 3 représente une vue en perspective du dispositif de montage de la figure 1, l'écran étant en position sortie ;
- la figure 4 représente, en perspective, une variante de réalisation du dispositif de montage de la figure 1 ;
- et la figure 5 représente, en perspective, une autre variante d'exécution du dispositif de montage de la figure 1.

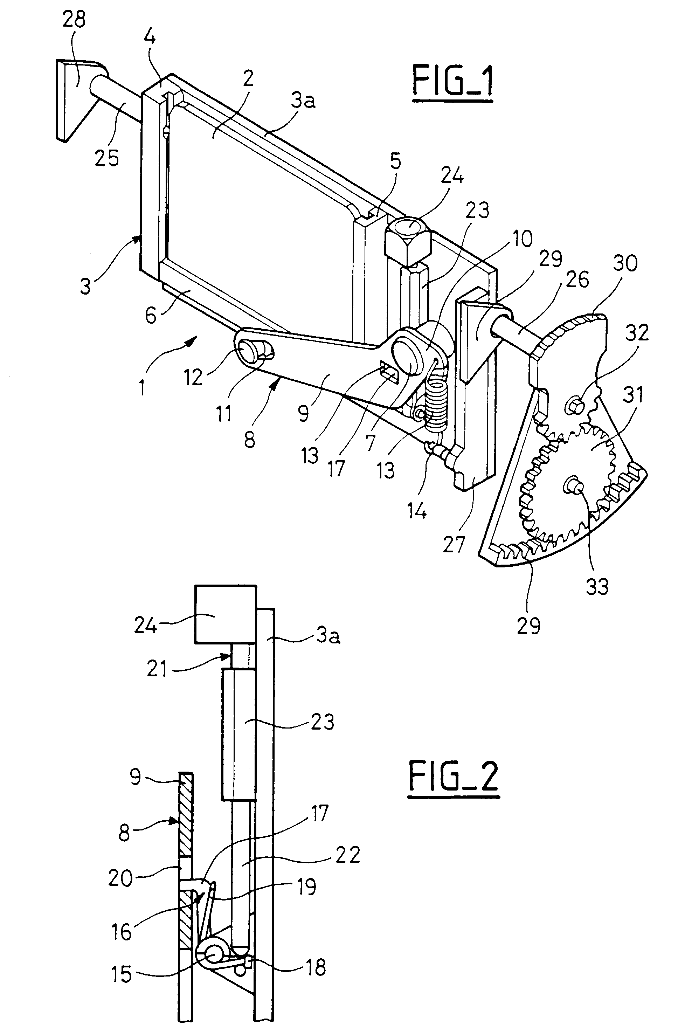

En se reportant aux figures 1 à 3, on voit qu'on a représenté un dispositif de montage 1 d'un écran 2 de projection ou d'affichage d'informations, cet écran étant schématisé sous la forme d'une plaque rectangulaire.

Le dispositif de montage 1 comprend un support 3 qui comprend une plaque longitudinale rectangulaire 3a qui porte sur l'une de ses faces une glissière 4 disposée près de l'un de ses bords d'extrémité et une glissière 5 disposée à distance de son autre bord, ces deux glissières 4 et 5 étant parallèles.

L'écran 2 est porté à sa partie inférieure par une traverse 6 dont les extrémités sont engagées dans les glissières 4 et 5 de telle sorte que l'écran 2 est mobile entre une position rentrée dans laquelle il s'étend parallèlement et latéralement à la plaque 3, la traverse 6 étant à l'extrémité inférieure des glissières 4 et 5, et une position sortie dans laquelle l'écran 2 s'étend vers le haut au-delà de la plaque 3, la traverse 6 étant à l'extrémité supérieure des glissières 4 et 5.

Entre la glissière 5 et son bord d'extrémité correspondant et à mi-hauteur, la plaque 3a du support 3 porte un axe transversal 7 sur lequel est monté un levier plat 8 qui s'étend parallèlement à la plaque 3a qui comprend deux bras opposés 9 et 10. Le bras 9 passe devant la glissière 5 et présente à son extrémité un passage oblong 11 au travers duquel s'étend un axe transversal 12 porté par la glissière 6 sensiblement en son milieu.

Sur le bras 10 est accrochée l'extrémité supérieure d'un ressort de traction 13 dont l'autre extrémité est accrochée à un doigt 14 du support 3 prévu à la partie inférieure de la plaque 3a.

Comme le montre plus précisément la figure 2, le support 3 comprend un axe longitudinal 15 qui s'étend à distance de la plaque 3a et sur lequel est monté de façon articulée un levier 16 dont un bras s'étend vers le haut en arrière du bras 9 du levier 8 et présente un doigt de maintien 17 dirigé vers le bras 9 et dont un autre bras 18 s'étend vers la plaque 3a. Ce levier 16 est soumis à un ressort 19 sollicitant le doigt de maintien 17 vers le bras 9 du levier 8.

Lorsque l'écran 2 est à sa position rentrée, le doigt de maintien 17 du levier 16 est engagé dans une encoche 20 du bras 9 du levier 8 et maintient ce dernier à sa position pivotée basse à l'encontre de l'effet du ressort de traction 13.

Le dispositif de montage 1 comprend un organe d'actionnement 21 qui comprend une tige 22 montée dans une glissière 23 parallèle à la glissière 5 et disposée entre cette dernière et l'axe transversal 7. L'extrémité inférieure de la tige 22 est en appui sur le bras 18 du levier 16 et son extrémité supérieure porte un bouton 24 qui dépasse légèrement du bord supérieur de la plaque 3a.

Ainsi, lorsqu'on appuie vers le bas sur le bouton 24, la tige 22 agit vers le bas sur le bras 18 du levier 16 de manière à faire pivoter le levier 16 à l'encontre du ressort 19, dégageant ainsi le doigt de maintien 17 de l'encoche 20.

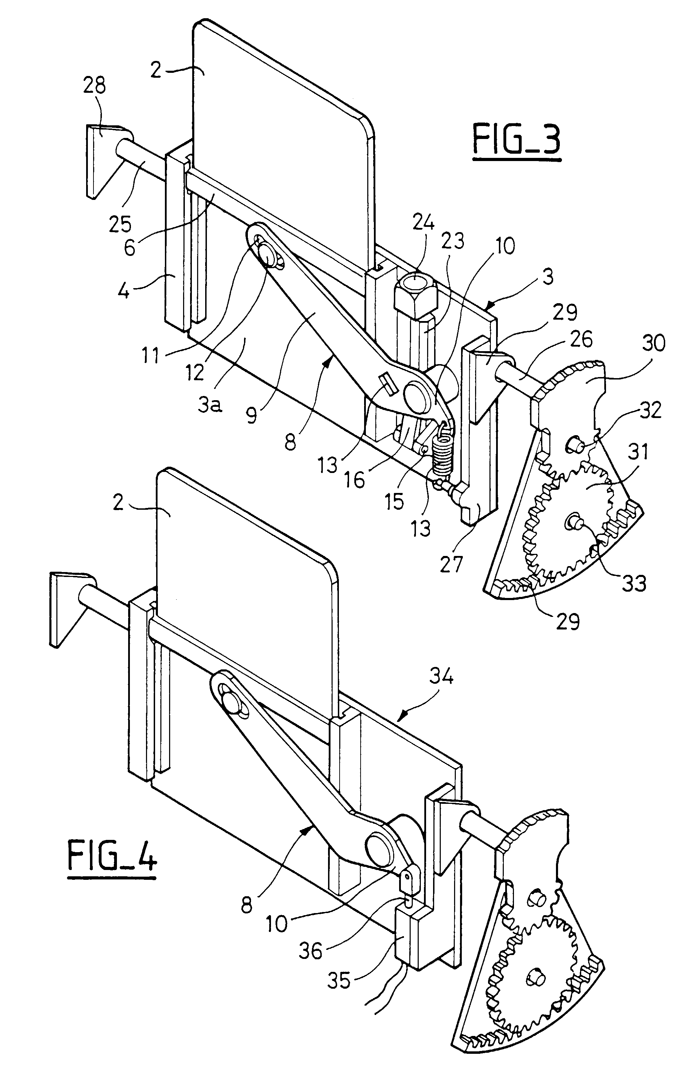

Le levier 8 étant ainsi libéré, le ressort de traction 13 tire vers le bas sur le bras 10 du levier 8 dont le bras 9 se relève et entraîne vers le haut l'écran 2 de manière à l'amener à sa position sortie, cette position étant maintenue sous l'effet du ressort de traction 13. Le bouton 24 étant relâché, l'extrémité du doigt de maintien 17 du levier 16 est en appui contre le bras 9 du levier 8. Cette position sortie est représentée sur la figure 3

Pour replacer l'écran 2 à sa position rentrée, il suffit d'appuyer sur son bord supérieur de manière à le déplacer vers le bas jusqu'à sa position rentrée, en s'opposant à l'effort du ressort de traction 13, le doigt de maintien glissant sur le bras 9 du levier 8. Lorsque l'écran arrive à sa position rentrée, le doigt de maintien 17 du levier 16 reprend sa position dans l'encoche 20 du levier 8 et empêche l'écran de remonter.

Le dispositif de montage 20 comprend en outre un axe longitudinal 25 qui est fixé sur la glissière 4 et, coaxialement, un axe longitudinal 26 opposé qui est fixé sur une pièce intermédiaire 27 fixée sur le bord de la plaque 3a du support 3 du côté de la glissière 5. Les axes 25 et 26 sont montés tournants sur des consoles de fixation 28 et 29 fixées à une structure du véhicule.

Le dispositif 1 comprend en outre un secteur denté 29 qui est fixé sur l'extrémité de l'axe 26 et qui s'étend vers le bas, et comprend en outre une molette dentée 30 placée entre un pignon denté 31 et le secteur denté 29. La molette 30 et le pignon 31 sont portés par des axes longitudinaux 32 et 33 portés par une structure du véhicule.

Ainsi, en faisant pivoter la molette 30 dans un sens ou dans l'autre, on transmet ce mouvement de rotation au support 3 par l'intermédiaire du pignon denté 31 et du secteur denté 29 et on peut ainsi procéder au réglage de la position angulaire du support 3 et donc de l'écran 2 autour des axes horizontaux 25 et 26, notamment à sa position sortie.

Dans un exemple d'installation, le dispositif 1 peut être intégré dans la planche de bord du véhicule et être disposé en-dessous d'une de ses parois dans laquelle seraient prévues une fente pour le passage de l'écran 2, une ouverture au travers de laquelle s'étendrait le bouton 24 et une ouverture au travers de laquelle s'étendrait la partie supérieure de la molette 30. De cette façon , le conducteur du véhicule peut à volonté placer l'écran 2 à sa position rentrée ou escamotée, invisible, ou le placer à sa position sortie pour l'utiliser.

En se reportant à la figure 4, on voit que le dispositif de montage 34 représenté se différencie du dispositif de montage de la figure 1 par le fait que le mécanisme d'actionnement du levier 8, composé principalement du ressort 13, du levier 16, de la tige 22 et du bouton 24 est supprimé et remplacé par un électro-aimant 35 dont la tige d'actionnement 36 est reliée à l'extrémité du bras 10 du levier 8, la course de cette tige d'actionnement 36 étant telle qu'elle permet de faire pivoter le levier 8 de façon à faire passer l'écran 2 de sa position rentrée à sa position sortie et réciproquement.

Dans une variante d'exécution, l'électro-aimant 35 pourrait être remplacé par tout actionneur, par exemple par un vérin électrique ou un vérin pneumatique.

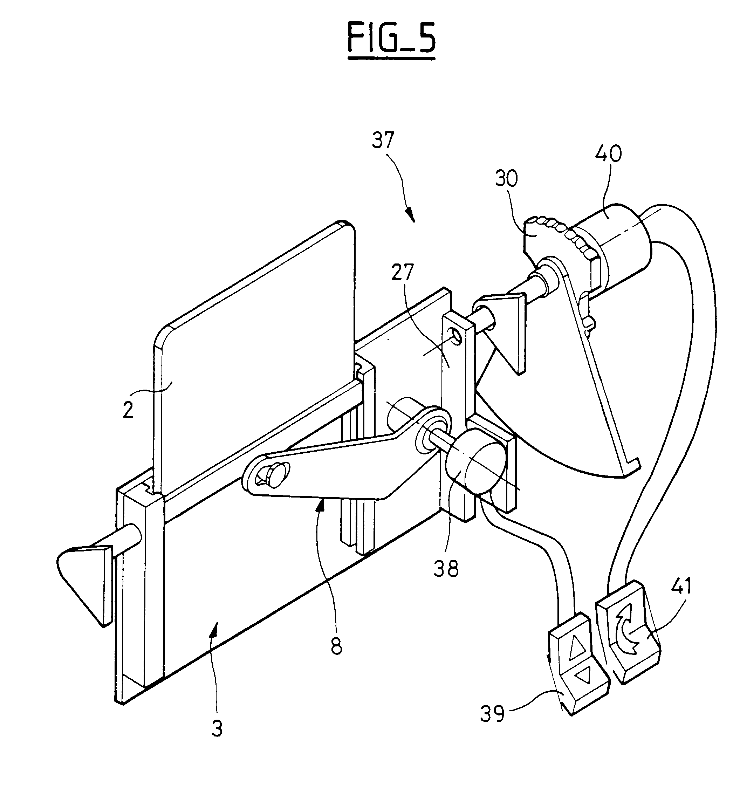

En se reportant à la figure 5, on voit que le dispositif de montage 37 représenté se différencie du dispositif 34 de la figure 4 par le fait que l'électro-aimant 35 est supprimé et que l'actionnement du levier 8 peut être obtenu grâce à un motoréducteur électrique 38 porté par la pièce latérale 27, ce motoréducteur étant électriquement relié à un bouton 39 d'actionnement électrique placé à un endroit approprié accessible par le conducteur du véhicule pour commander dans un sens ou dans l'autre le mouvement de l'écran 2 sous l'effet du levier 8.

En outre, dans cette variante, la molette 30 peut également être entraînée en rotation dans un sens ou dans l'autre par un motoréducteur électrique 40 porté par une structure du véhicule et susceptible d'être commandé par un bouton d'actionnement électrique 41 par exemple disposé à côté du bouton 39.

La présente invention ne se limite pas aux exemples ci-dessus décrits. Bien des variantes de réalisation sont possibles sans sortir du cadre défini par les revendications annexées.

## Revendications

1. Dispositif de montage d'un écran de projection ou d'affichage d'informations pour véhicule automobile, caractérisé par le fait qu'il comprend :
- un support (3) comprenant des glissières (4, 5) le long desquelles ledit écran (2) est mobile entre une position rentrée et une position sortie,
- un levier pivotant (8) relié de façon articulée d'une part audit support et d'autre part audit écran,
- des moyens d'actionnement (13, 22) pour faire pivoter ledit levier entre deux positions extrêmes correspondant à la position rentrée et à la position sortie dudit écran,
- et des moyens de maintien (13, 17) dudit levier à ses positions extrèmes.

2. Dispositif selon la revendication 1, caractérisé par le fait que ledit écran est porté par une traverse reliée de façon articulée audit levier.

3. Dispositif selon l'une des revendications 1 et 2, caractérisé par le fait que ledit levier (8) est monté pivotant sur un axe (7) dudit support, ledit levier et ledit écran présentant respectivement un doigt (12) et un passage oblong (11), dans lequel est engagé ce doigt.

4. Dispositif selon l'une quelconque des revendications précédentes, caractérisé par le fait que ledit levier (8) s'étend et se déplace dans un plan parallèle audit écran (2).

5. Dispositif selon l'une quelconque des revendications précédentes, caractérisé par le fait que ledit support présente des moyens de pivotement (25, 26) dont l'axe s'étend parallèlement audit écran et perpendiculairement auxdites glissières, ainsi que des moyens de réglage (30) de la position angulaire dudit support autour de cet axe.

6. Dispositif selon l'une quelconque des revendications précédentes, caractérisé par le fait que ledit support (3) comprend une plaque (3a), ledit écran s'étendant parallèlement à et d'un côté de cette plaque.

7. Dispositif selon l'une quelconque des revendications précédentes, caractérisé par le fait que lesdits moyens d'actionnement du levier comprennent un ressort (13) agissant sur ledit levier (8) de façon à déplacer ledit écran (2) de sa position rentrée à sa position sortie.

8. Dispositif selon l'une quelconque des revendications précédentes, caractérisé par le fait que lesdits moyens de maintien comprennent un doigt (17) coopérant avec ledit levier (8) lorsque ledit écran (2) est à sa position rentrée, ainsi qu'un bouton d'actionnement (24) permettant d'escamoter ce doigt de maintien à l'encontre d'un ressort.

9. Dispositif selon l'une quelconque des revendications précédentes, caractérisé par le fait que lesdits moyens d'actionnement comprennent des moyens de motorisation (35), en particulier un électro-aimant, un vérin, un motoréducteur électrique.

10. Dispositif selon l'une quelconque des revendications précédentes, caractérisé par le fait que lesdits moyens d'actionnement comprennent une lame à mémoire de forme.

11. Dispositif selon la revendication 5, caractérisé par le fait que lesdits moyens de réglage comprennent des moyens de motorisation (40).

12. Dispositif selon l'une quelconque des revendications précédentes, caractérisé par le fait qu'il est intégré en dessous d'une paroi de la planche de bord du véhicule, cette paroi présentant une fente pour le passage dudit écran.
